# EUROPEAN PATENT APPLICATION

(11) **EP 1 895 440 A1**
(43) Date of publication of application: **05.03.2008**
(21) Application number: 06018318.3
(22) Date of filing: 01.09.2006
(51) Int. Cl.: G06F 21/00, H04L 29/06, H04L 29/08

(54) **Token-based service access**

(71) Applicant: Nokia Siemens Networks GmbH & Co. KG, 81541 München (DE)
(72) Inventor: Abendroth, Jörg, 81737 München (DE); Cuellar, Jorge, Dr., 82065 Baierbrunn (DE); Marhöfer, Michael, Dr., 82041 Deisenhofen (DE); Rajasekaran, Hariharan, 81675 München (DE); Schäfer, Manfred, 85661 Forstinning (DE)

(57) **Abstract**

Association of service providers requires the communication of trust-related information. Usually, tokens are used as a vehicle for exchanging this kind of information. The present invention improves the flexibility of service association by employing a rights expression language REL for tokens. Such a token is used in an authentication procedure where relevant parameters are encoded in a REL and provided from a first service provider to a second service provider by means of a token. The authentication procedure is performed in accordance to this input.

## Description

In the data world, the ever increasing multifariousness and complexity of data services urges service provider to interact, to cooperate, and to affiliate.

A framework for Web Services has been set up to facilitate the collaboration between different services. Here, a Web Service is assumed to be a software system designed to support interoperable machine-to-machine interaction over a network (definition by the W3C consortium). A Web Service typically has an interface that is described in a machine-processable format such as WSDL (web service description language). Other systems interact with the Web services via messages typically conveyed using HTTP (hypertext transfer protocol), and normally comprising XML (extended markup languagee) statements in conjunction with other Web-related standards. To improve interoperability further standards are developed.

A major concern with interoperating services is to provide for security. Security requirements immediately lead to authorization and authentication procedures that are mandatory for ensuring security standards. A number of companies have collectively come up with a concept for Web Services to make these security procedures functional across multiple services. This concept is commonly referred to as Web Services Federation Language (WS-Language). It proposes mechanisms to allow different security realms (e.g. belonging to different Web Services) to federate by brokering trust of identities, attributes, and authentication between participating Web services.

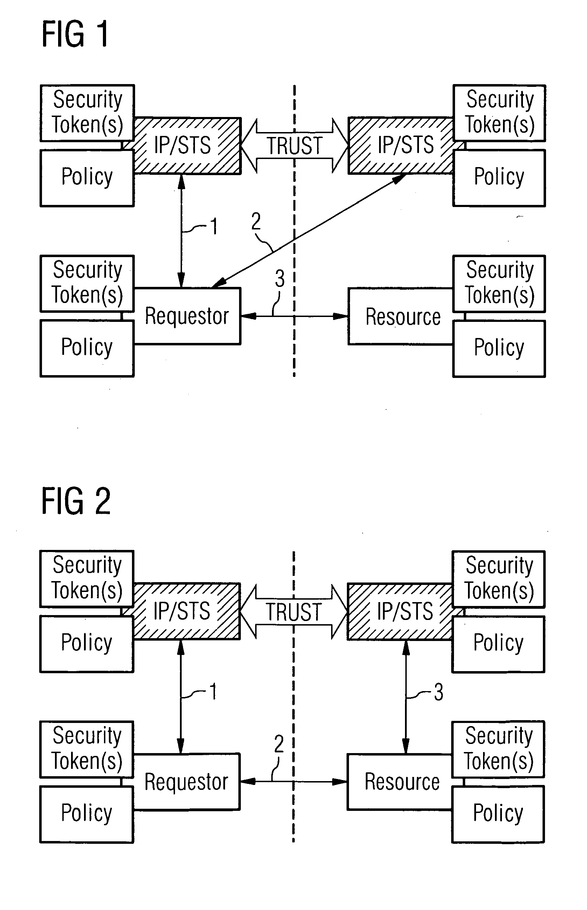

Two examples of how the interaction may work are provided in Fig. 1 and Fig. 2. More complicated examples can be found in WS-language specification. The figures show a requestor (bottom left) that intends to access a resource (bottom right). The requestor is known within his so-called trust realm. The resource is situated outside this realm (as indicated by the dashed line). In order to establish a trusted relationship with the resource provider a security token is obtained in step 1 from a security token service (in addition a colocated identity provision (IP) service may be subscribed to). In step 2 this token is either provided to a security token service/identity provider outside the trusted realm (Fig. 1) or to the resource provider (Fig. 2). In Fig. 1 the third step consists of providing a second token obtained from the second security token service/identity provider to the resource provider for authentication. In the alternative scenario of Fig. 2 the token is passed on to the second security token service/identity where it is authenticated.

The mechanisms described above assume a trusted relationship (affiliation or association) of the involved realms, e.g. between two or more security token service/identity provider entities. That way multiple service realms can merge to form collection of realms with a trust relationship, i.e. federations (a term used by the Web Services Federation Language specification to describe this relationship). The vehicle for transporting the relevant information for authorization generally is provided by a token, i.e. data that prove or certify certain information.

Evidently, a format or framework needs to be defined for the exchange of security information via tokens so that different realms or service provider can interpret the token and can extract the relevant security data. A current approach to provide such a framework was instigated by OASIS (Organization for the Advancement of Structured Information Standards). SAML (Security Assertion Markup language) is a framework for exchanging security information between online business partners, which was developed by the Security Services Technical Committee (SSTC) of OASIS. SSTC developed SAML by defining, enhancing and maintaining a standard XML-based framework for creating and exchanging authentication and authorization information.

Applying the above schemes Web Services can co-operate to enlarge the scope of services. To this end, these services rely on an underlying network for transport of messages such as tokens. The network operator himself also is a service provider who has an interest in affiliating with other services. The range of services offered by a network provider depends on the type of network. For instance, a mobile network and the voice service over the network are typically provided by a Mobile Network Operator (MNO). The MNO also offers other services such as Internet Browsing, Music and Gaming, or location based services such as a petrol station finder, etc. to subscribers.

In some situations, services offered by the MNO can more efficiently be provided by third party service providers who have a business relationship with the MNO. Below such service providers are also referred to as "affiliated third party service providers (ATPSP)".

As an example for such a service let us assume that the mobile user tries to access an online location service for finding the next petrol station over the MNO he subscribed to, i.e. the service is provided by an affiliated third party service provider via the MNO network. First, the user is authenticated by the MNO when he connects to the mobile network by means of his Subscriber Identity Module (SIM). Second, either the MNO or the service provider authorises the user to access the requested service depending on the user's contract, profile, and status.

In order to carry out the authentication and authorisation processes described in the above example, an authentication and authorization infrastructure must be in place at the network operator and at the service provider. Typically, authentication and authorisation procedures are minutely standardised so as to provide for security in a multi-network environment with multiple network operators and complex charging rules.

There is a need for a more flexible and more powerful procedures for supporting the exchange of trust-related information so as to allow for the interaction of different services. In particular, these procedures need to be sufficiently malleable to integrate the security requirements of different kinds of services, e.g. network-based services, Web Services, and content-oriented services, so as to allow for efficient service brokering between affiliated service providers.

The objective of the invention is to provide for more efficient and flexible authorization of service use relying on specific tokens that carry trust-related information, which directly corresponds to "rights", e.g. authorization of services.

The present invention proposes specifying or encoding trust-related information (e.g. information relating to a registration, an authentication, an authorization, a key, credentials etc.) that is transported via a token by means of a rights expression language (REL). Rights Expression Languages (REL) are often defined as machine-readable languages that declare rights and permissions. REL take their origin in goals such as the statement of legal copyright, the expression of contractual language, and the implementation of controls. Typically, REL can be employed in rights management scenarios such as digital rights management for content offered by content providers. As a rule, current RELs are at least to some extent machine-actionable or machine-readable so that the can be used for the purpose of this invention. RELs that can be readily used as proposed in this invention are ODRL (Open Digital Rights Management), MPEG-21/5 (Information Technology - Multimedia Framework - Part 5: Rights Expression Language), and OMA REL (Open Mobile Alliance Rights Expression Language). These general-purpose languages have a rich vocabulary that can be reduced or expanded to create a REL for a specific purpose.

According to the invention, a REL is employed in a method for authorizing use of a service (without the need for a centralised authorization infrastructure). As an initial step, an authentication procedure is performed with a first service provider. Therein a user, a device or the combination of a user and a device may be authenticated. For example, this first service provider is a network operator that authenticates a registered user or device. The term "service provider" is not to be construed to be limited to this kind of service. For instance, the service provider may be a Web service provider, a content provider, an authentication or certification service, a security token service etc. Also, the term "service provider" does not stand for a business but refers to the equipment or part of the equipment (apparatus, server, computer etc.) provided for the implementation of services. The term "service provider" was used to more succinctly express that there are different administrative domains (or realms) involved.

Upon authentication a token is generated. A token as used in this invention comprises REL expressions to grant secure service access. These REL expressions are transmitted to a destination, e.g. the second service provider. At the destination the token is interpreted or run. According to the result of this interpretation service access procedures are performed or not. Thus, the token activates or controls service access with the second service provider. Hence, a token as in this invention works as a computer program for controlling or activating functions (e.g. service access) at the equipment to which it is provided.

Information referring to the authentication is included or embedded in this token. For expressing this information a REL is employed. The token is provided to a second service provider where it serves as input for authorizing the use of a service provided by the second service provider.

Upon generation the token may be transferred to a device (or also to an individual device in a specific state) so that the device can pass on the token to the second service provider for authorization. A possible alternative is to directly transmit the token between the service providers.

According to an embodiment, the token comprises address information (such as a unified resource identifier URI) indication a location where information (e.g. semantic or syntactic information) for reading or interpreting REL expressions related to the service or specific to the service is to be found. This address information can be extracted from the token and used to retrieve the information for reading or interpreting REL expressions from the location corresponding to the address information. Thereupon the retrieved information can be used for dealing with REL expressions contained in the token.

This feature allows for a more dynamic employment of REL semantics according to the invention. Changes, extensions, and adaptations of RELs for new service scenarios can be made available at the indicated location. Thus, the frequency of regular REL updates with individual service providers can be reduced.

According to a further embodiment, an authorization procedure is performed with the first service provider in conjunction with the authentication procedure. A situation where it is sensible to carry through an authorization procedure with the first service provider is when a service provided by the first service provider is used for accessing or performing the services provided by the second service provider. For instance, the first service provider is a network operator whose network is used for the second service (e.g. content delivery from a content provider (second service provider) over a network operated by the first service provider).

The employment of REL for generating tokens has several advantages. REL is a language approach with predefined semantics. Contrary to current solutions they do not need an extra agreement between service providers regarding the data in tokens that are accepted or can be interpreted. In addition, many RELs are malleable and versatile so that they can be used with any type of trust-related information. As required, additional trust-related information of various types may be included (including issues as addressed by "trusted computing"). According to one embodiment, a first indicator or attestation (in the sense of the TCG organization) of a device state is included in the token and a second indicator of a device state is provided to the second service provider (preferably together with the token). Both indicators are compared at the second service provider. The authorization can then be made dependent on the result of the comparison. According to another embodiment, a session key is included in the token. For instance, this key is generated at an authorization procedure with the first service provider and provided for use with the second service provider. A scenario, where the embodiment is advantageously employed, is a two network scenario (e.g. G2 and G3 network), where both networks are jointly managed and only one PKI (public key infrastructure) is provided for both networks.

Thus, the present invention can be suitably employed with affiliated service providers. All types of service interaction are supported. The use of a REL allows for shaping the brokering security items in line with the needs or requirements of the respective service provider affiliations. The affiliation of different kind of service providers such as Web service providers, network operators and content providers is readily performed. In particular, the high standards and detailed description of rights and permissions that is imperative for the content provider's business can be easily accounted for in an authorization procedure according to the invention.

As RELs were developed for legal issues they typically allow for a high level of accuracy with the specification of trust-related information. Hence, the authorized service use can be defined more accurately. In addition, RELs are usually open towards extensions and adaptations. A combined use of two or more RELs is possible where the specification of rights is more suitable performed based on expressions from multiple RELs. This malleability is also due to the fact that RELs can be expressed as XML implementations so that it is entirely feasible to embed elements or entire blocks from the REL into any other XML-based metadata. Thus, they lend themselves not only to employment for authorization but also to employment for related purposes. For instance, REL messages can be used for sending charging or billing information from the second service provider to the first service provider or a user device.

According to a further embodiment, an identifier of the service requestor (e.g. device or user) is generated and included in the token. This identifier is also called pseudonym (e.g. in the Web Services Federation Language specifications). This identifier or pseudonym can be used for charging/billing and is preferably included in a REL charging/billing message sent from the first service provider to the second service provider or a user device. As an alternative to a pseudonym other information for identification of a user/device may be applied, e.g. IMSI (International Mobile Subscriber Identity) or MSISDN (Mobile Subscriber International ISDN Number).

The invention also comprises a token for use in a procedure for authorizing a use of a service, for charging, or for billing that comprises information written in a REL such as OMD REL, ODRL, or MPEG-21/5. This token preferably is generated by a first service provider to be used with a second service provider. Alternatively, the first service provider may turn to an external service for having the token generated. A token may also be generated by the second service provider for billing or charging.

According to an embodiment, the token also comprises address information (e.g. URI) indicating a location where information for reading or interpreting REL expressions related to the service is available.
The above token may comprise information related to or relevant for a service provided by the second service provider such as
- information related to permissions or right with respect to the use of at least one service of the first service provider
- information for identifying a user (e.g. identifier, pseudonym)
- at least one session key for employment in a service provided by the second service provider
- at least one attestation value (e.g. attestation of a device state)

The invention also comprises an apparatus (e.g. computer or server) for generating a token for use in an authorization method as described above and an apparatus generating a token as specified.

Below an embodiment of the invention is described with reference to figures. The figures show
Fig. 1: A first token-based authorization procedure
Fig. 2: A second token-based authorization procedure
Fig. 3: An example for a REL code
Fig. 4: The structure of a REL license corresponding to the code shown in Fig. 3
Fig. 5: A REL token as used in the present invention
Fig. 6: A box with information about the type of REL and the schema the REL uses
Fig. 7: A scenario for obtaining a token
Fig. 8: Employment of the token of Fig. 7 for accessing a service

Within the embodiment it is assumed that the first service provider is a network operator. Hence, below the first server is referred to as network operator and the second service provider as service provider.

Below fundamentals of RELs are described to better explain how RELs are put to use in authorization scenarios as proposed by the invention.

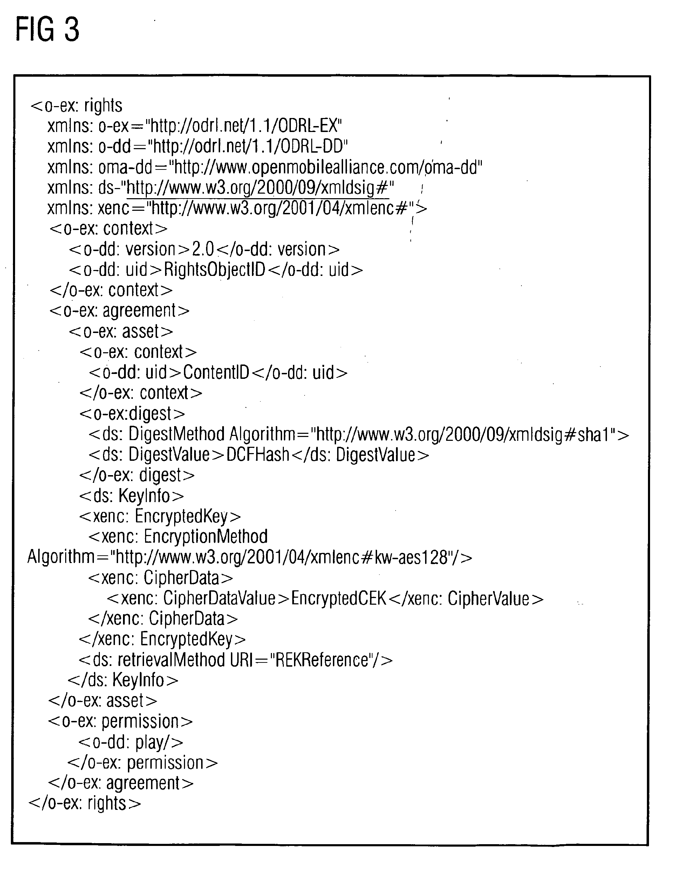

Rights Expression Languages are XML based machine readable languages used for expressing rights/licensing terms for digital content such as music and video files, documents etc. Such RELs are used in the field of Digital Rights Management (DRM) to specify the rights of the user over a piece of digital content he has bought. The REL specifies rights like how many times the content can be played, edited, copied etc by the user. The main advantage of using REL is that their semantics are standardised. Some of the existing standards of REL are the MPEG-21 REL from the MPEG group and the OMA-REL from the Open Mobile Alliance. Once the service providers and network operators decide on the standard of the REL they are willing to support, the token issued by a network operator can be interpreted correctly by any service provider without resorting to any other intermediary instance. The availability of an infrastructure to interpret RELs is likely to be high in future due to their use in DRM for protecting content. An example of a license written in the REL standard of OMA (which is in use for DRM) is shown in Fig. 3.

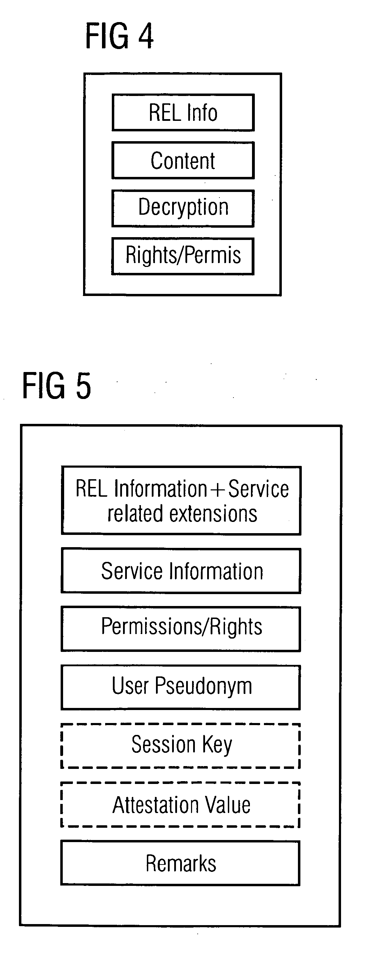

Fig.4 shows the structure of the license file corresponding to the code of Fig. 3. The licence grants permission to play a digital file for unlimited number of times. The structure of this license can be adapted to form a token suitable for the present invention. Such a REL token is shown in Fig. 5. Below the information or parameters contained in the individual blocks is described. Dashed lines indicate that the information of the corresponding block or box is optional and may be used in different embodiments of the invention.

### REL Information + Service related extensions:

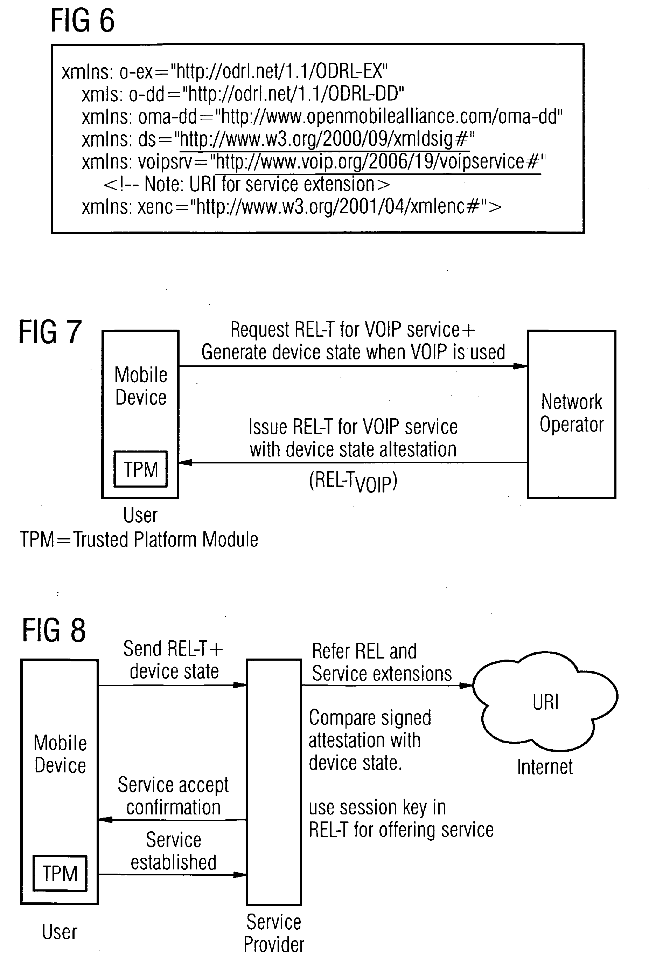

This box contains information about the type of REL and the schema that the REL uses. An example is shown in Fig. 6. The service related extensions are REL extensions that are defined for a particular service that is provided by the service provider. It contains a reference to a URI (Uniform Resource Identifier) which defines the interfaces and properties of a particular service or service class and the associated semantics which the service provider can refer to while offering the service to the user. For further illustration we assume that the token is to be used for accessing a Voice over IP service (VOIP) offered by a service provider. The REL extensions that are defined for such a service are standardised. These extensions can be retrieved from the internet by using a URI. Any service provider who is willing to accept the REL token for the VOIP service must conform to the syntax and semantics defined at the URI and the references therein.

### Service Information:

This box contains information regarding the service for which the REL token is issued. This information is written in the REL language. For interpreting these REL language expressions, the service provider may need to refer to the URI mentioned in the explanations of the previous box.

### Permission/Rights:

This box contains information about the rights granted to the user for using the service. This box, for example, can hold information about the maximum amount for which the user is allowed to place orders using an online ordering service, or the privilege to use a certain premium feature of the service etc.

### User Pseudonym:

This is a pseudonym or identifier that is issued for the user by the Network Operator. It is presented to the service provider by the user when accessing services. The service provider bills the user based on this pseudonym and the Network Operator is the only one who can map this back to the identity of the user.

### Session Key:

This is a key generated by the Network Operator and embedded in the REL-T. This key can be used to secure the communication between the service provider and the user device. This is an optional feature. Its use is dependent on the respective scenario.

### Attestation Value:

This is a value that indicates a particular state of the device. This value is generated using integrity reporting mechanisms (which are developed by the Trusted Computing Group (TCG) for mobile devices) present on the user device. The user presents this value at the time of requesting the token to the Network Operator. The Network Operator attests this value by signing it. The user can then use this signed attestation value to indicate the integrity of his device to the service provider. This is done by generating a new state value at the time of service request and sending this value to the service provider. The service provider compares the new value with the signed one and when they match, he can be sure about the integrity of the device. This procedure eliminates the need for expensive attestation and integrity measurement verification infrastructure at the service provider's end.

### Remarks:

This field is meant for the user to enter his remarks about the REL token at the time he requests a REL token. The remarks here can help him identify the nature of the REL token.

Below we describe a scenario where different features proposed in the invention can be used.

We assume that the Voice over IP (VOIP) service is provided by a service provider different from the network operator. We further assume that there are requirements by the service provider as a prerequisite for service use, i.e. the user device must be trusted, security of the VOIP connection must be ensured, and the user's rights must be accurately specified.

To meet these requirements a token is produced that includes an attestation of the device state (secure device state), a session key for securing the VOIP connection, and details regarding the user's rights.

Fig. 7 and Fig. 8 show an accession of the VOIP service according to the invention.

First the user obtains a REL token from the Network Operator as shown in Fig. 7.

The user contacts the Network Operator (NO) and browses the different service for which the NO offers REL tokens. He chooses to subscribe to a VOIP service and indicates the options that he needs when using that service. The NO asks for the device state from the user which he sends back to the NO. The user also fills out the remarks for the particular REL token. Subsequently, the Network Operator can produce the REL token which has the information about the service, the user pseudonym and the options for which the user is entitled to use. The Network Operator embeds the device state attestation and a session key in the REL-T along with the remarks of the user.

Thereupon, the REL token for the VOIP service is provided to the user device.

Fig. 8 shows the second step of accessing a VOIP service for which purpose the REL token is put to use.

The user transmits the REL token to the service provider along with the device state. The token can be transferred via the network, or by near field communication mechanisms such as infra-red, Bluetooth etc. The service provider (SP) refers the URI mentioned in the REL-T to interpret the REL-T. The SP checks the device state presented with the one signed by the NO. When they match, he is sure about the integrity of the user device.
i. The service provider sends a confirmation for accepting the REL token.
ii. The service is established using the session key present in the REL token.

In the scenario shown above, the service provider bills the NO for the service usage by using the pseudonym in the REL-T.

## Claims

1. A method for authorizing service use, comprising the steps of
- performing an authentication procedure with a first service provider,
- generating a token comprising information about the authentication,
- using a rights expression language REL for expressing this information,
- providing the token to a second service provider as input for an authorization procedure, and
- authorizing a use of a service provided by the second service provider.

2. The method of claim 1, wherein
- the token is provided from the first service provider to a device, and
- the token is provided from the device to the second service provider.

3. The method of claim 1, wherein
- the token comprises address information indicating a location of a storage point of information for reading or interpreting REL expressions related to the service.

4. The method of claim 3, comprising the steps of
- extracting the address information from the token,
- obtaining information for reading or interpreting REL expressions, and
- using this information for reading or interpreting REL expressions contained in the token.

5. The method of one of the preceding claims,
**characterized in that**
the first service provider is a network operator.

6. The method of one of the preceding claims,
**characterized in that**
an authorization procedure is performed with the first service provider in conjunction with the authentication procedure.

7. The method of one of the preceding claims,
**characterized in that**
authentication of a user, a device, or of a combination of a user and a device is performed.

8. The method of one of the preceding claims,
**characterized in that**
- a first indicator of a device state is included in the token,
- a second indicator of a device state is provided to the second service provider,
- both indicators are compared at the second service provider, and
- authorization is made dependent on the result of the comparison.

9. The method of one of the preceding claims,
**characterized in that**
- at least one session key is included in the token, and
- the session key is used for the service.

10. A method for transporting information for charging or billing a service use,
**characterized in that**
- information related to a service use is expressed via a rights expression language,
- the information is transmitted to a charging or billing service, and
- the information is used for charging or billing in connection with the service use.

11. The method of claim 10,
**characterized in that**
- the service use was authorized by a method according to one of the claims 1 to 9.

12. The method of claim 11,
**characterized in that**
- the charging or billing service is provided by the first service provider.

13. A token for holding information related to a procedure for authorizing a use of a service, for charging, or for billing,
**characterized in that**
the token comprises information written in a rights expression language.

14. The token of claim 13,
**characterized in that**
the token is generated by a first service provider to be used with a second service provider.

15. The token of claim 13 or 14,
**characterized in that**
the token comprises address information indicating a location where information for reading or interpreting REL expressions related to the service is stored.

16. The token of one of the claims 13 to 15,
**characterized in that**
the token comprises information related to a service that is to be authorized.

17. The token of one of the claims 13 to 16,
**characterized in that**
the token comprises information related to permissions or rights regarding the use of at least one service of a service provider.

18. The token of one of the claims 13 to 17,
**characterized in that**
the token comprises information for identifying a user.

19. The token of one of the claims 13 to 18,
**characterized in that**
the token comprises at least one session key.

20. The token of one of the claims 13 to 19,
**characterized in that**
the token comprises at least one attestation value of a device state.

21. An apparatus for generating a token for use in a method according to one of the claims 1 to 12.

22. An apparatus for generating a token according to one of the claims 13 to 20.
